# EUROPÄISCHE PATENTSCHRIFT

(11) **EP 3 610 338 B1**
(45) Veröffentlichungstag und Bekanntmachung des Hinweises auf die Patenterteilung: **04.06.2025**
(21) Anmeldenummer: 18716890.1
(22) Anmeldetag: 06.04.2018
(51) Int. Cl.: G05B 19/042, G01M 13/04, F16C 19/52

(54) **ZUSTANDSÜBERWACHUNGSGERÄT ZUM ÜBERWACHEN DES ZUSTANDS EINER MECHANISCHEN MASCHINENKOMPONENTE**
STATE MONITORING DEVICE FOR MONITORING THE STATE OF A MECHANICAL MACHINE COMPONENT
APPAREIL DE SURVEILLANCE DESTINÉ À SURVEILLER L'ÉTAT D'UN COMPOSANT DE MACHINE MÉCANIQUE

(30) Priorität: 11.04.2017 DE 102017107814
(43) Veröffentlichungstag der Anmeldung: 19.02.2020
(73) Patentinhaber: Phoenix Contact GmbH & Co. KG, 32825 Blomberg (DE)
(72) Erfinder: LINNE, Michael, 32756 Detmold (DE)
(74) Vertreter: Patentship Patentanwaltsgesellschaft mbH
(86) Internationale Anmeldenummer: PCT/EP2018/000166
(87) Internationale Veröffentlichungsnummer: WO 2018/188780

(56) Entgegenhaltungen:
- EP-A1- 0 961 918
- EP-B1- 0 961 918
- WO-A1-2013/160053
- WO-A1-98/01831
- US-A1- 2016 290 854
- US-B1- 6 199 018

## Beschreibung

Die Erfindung betrifft ein Zustandsüberwachungsgerät zum Überwachen des Zustands einer mechanischen Maschinenkomponente. Insbesondere betrifft die Erfindung ein IO-Link Gerät zum Condition Monitoring.

Beim Condition-Monitoring (CM) geht es um die Zustandsüberwachung von Maschinen und deren mechanischen Baugruppen. Im Wesentlichen soll der Zustand von Lagern überwacht und Lagerschäden frühzeitig erkannt werden, um einen Ausfall der Maschine zu vermeiden. Der Zustand des Lagers lässt sich nach der VDI-Norm 3832 in "keine Schädigung", "leichte Vorschädigung" und "Lager defekt" einteilen.

Die Ermittlung des Zustands eines Lagers kann durch eine Vibrationsmessung mit Bewertung der maximal auftretenden Amplitude und des Spektrums der Stoßimpulse erfolgen. Durch die Kombination der Vibrationsmessung mit einer Messung der Lagertemperatur und der Drehzahl lassen sich die Aussagen zum Lagerzustand noch verbessern.

Derzeit sind nur Feldbusgeräte erhältlich, die über eine der oben genannten Funktionen verfügen. Somit ist jeweils ein Gerät für die Vibrationsmessung, eines für die Temperaturmessung und eines für die Drehzahlmessung erforderlich. Die Feldbusgeräte können nur im Schaltschrank in einer Station und nicht dezentral, z.B. direkt an einer Maschine, betrieben werden. Feldgeräte für die Vibrationsmessung verfügen über den Anschluss eines teuren, externen Piezo-Sensors mit IEPE-Schnittstelle. Die Auswertung aller Signale und somit des Zustands der Maschine erfolgt in einer zentralen, überlagerten Steuerung.

Die Druckschrift US 2016 / 290854 A1 bezieht sich auf eine Vorrichtung zum Analysieren des Zustands einer Maschine. Das Zustandsanalysesystem umfasst eine Sensoreinheit zum Erzeugen eines Messwerts. Der Messwert kann von einer Bewegung abhängig sein, insbesondere von Vibrationen oder Stoßimpulsen, die durch Lager verursacht werden, wenn sich die Welle dreht.

Die Druckschrift WO 2013 / 160053 A1 bezieht sich auf ein Verfahren zum Vorhersagen der Restlebensdauer eines Lagers.

Die Druckschrift EP 0 961 918 A1 bezieht sich auf das automatische Vorhersagen eines Maschinenfehlers mit einem Wandlersensor.

Die Druckschrift WO 98 / 01831 A1 bezieht sich auf ein Verfahren zur Bewertung des Zustandes einer Maschine mit einer Messstelle, das von einer beweglichen Analysevorrichtung durchgeführt wird.

Die Druckschrift US 6 199 018 B1 offenbart ein verteiltes Diagnosesystem mit einer lokalen Überwachungsvorrichtung für eine Maschine.

Es ist die Aufgabe der vorliegenden Erfindung, ein Konzept zum verbesserten Condition-Monitoring, insbesondere zur verbesserten Zustandsüberwachung von mechanischen Maschinenkomponenten, zu schaffen.

Diese Aufgabe wird durch ein Zustandsüberwachungsgerät mit den Merkmalen nach dem unabhängigen Patentanspruch 1 gelöst. Vorteilhafte Ausführungsformen sind Gegenstand der abhängigen Ansprüche, der Beschreibung und der Zeichnungen.

Mit einem solchen Zustandsüberwachungsgerät wird der technische Vorteil erreicht, dass sich der Zustand eines Lagers und damit der Zustand der Maschine bzw. Anlage ermitteln lässt. Auf diese Weise lassen sich Verschleiß und Schäden frühzeitig erkennen und die Wartung optimieren.

In einer vorteilhaften Ausführungsform des Zustandsüberwachungsgeräts ist die Kommunikationsschnittstelle ausgebildet, das Zustandsüberwachungsgerät über eine Punkt-zu-Punkt Verbindung mit dem externen Steuergerät zu koppeln.

Dadurch wird der technische Vorteil erreicht, dass sich das Zustandsüberwachungsgerät einfach und übersichtlich durch das externe Steuergerät bedienen lässt.

In einer vorteilhaften Ausführungsform des Zustandsüberwachungsgeräts ist die Kommunikationsschnittstelle ausgebildet, das Zustandsüberwachungsgerät mit externer Gleichspannung zu versorgen.

Dadurch wird der technische Vorteil erreicht, dass das Zustandsüberwachungsgerät kompakt aufgebaut sein kann, da es keine eigene Spannungsversorgung und ein entsprechendes Netzteil bzw. eine Batterie benötigt.

In einer vorteilhaften Ausführungsform umfasst das Zustandsüberwachungsgerät einen Gleichspannungswandler, der ausgebildet ist, die über die Kommunikationsschnittstelle zugeführte externe Gleichspannung in eine interne Systemspannung zu wandeln.

Dadurch wird der technische Vorteil erreicht, dass die extern zugeführte Versorgungsspannung nicht gleich der internen Systemspannung sein muss. Die bewirkt größere Flexibilität beim Design des Zustandsüberwachungsgeräts.

In einer vorteilhaften Ausführungsform des Zustandsüberwachungsgeräts ist der Controller ausgebildet, als Slave im Master-Slave Betrieb zu operieren und ist über die Kommunikationsschnittstelle steuerbar.

Dadurch wird der technische Vorteil erreicht, dass übliche Master-Slave Architekturen eingesetzt werden können. Der Controller kann leistungseffizient aufgebaut sein, da er nur auf Anforderung des Masters arbeiten muss und sich die restliche Zeit im Ruhemodus befinden kann.

In einer vorteilhaften Ausführungsform des Zustandsüberwachungsgeräts umfasst die Kommunikationsschnittstelle eine IO-Link Schnittstelle.

Der IO-Link Bus bietet die vorteilhafte Möglichkeit, das Gerät dezentral direkt an die Maschine zu schrauben und über nur ein Kabel die Busverbindung mit Spannungsversorgung herzzustellen.

In einer vorteilhaften Ausführungsform umfasst das Zustandsüberwachungsgerät einen IO-Link PHY Baustein, der ausgebildet ist, die Informationen über den Zustand der Maschinenkomponente an das externe Steuergerät zu übertragen.

Dadurch wird der technische Vorteil erreicht, dass das Design des Zustandsüberwachungsgeräts vereinfacht wird, da als IO-Link PHY Baustein ein Standardbaustein eingesetzt werden kann.

Das Zustandsüberwachungsgerät umfasst einen ersten Eingang zum Anschluss zumindest eines externen Temperatursensors zur Erfassung zumindest einer Temperatur der Maschinenkomponente, wobei der Controller ausgebildet ist, den Zustand der Maschinenkomponente ferner basierend auf Messdaten des ersten Eingangs zu bestimmen.

Durch die Integration des Temperatureingangs wird die Zustandsdiagnose genauer gemacht, da neben dem Vibrationsverhalten auch das Temperaturverhalten der Maschine berücksichtigt wird.

Der erste Eingang umfasst eine Mehrzahl von RTD-Leitungen zum Anschluss zumindest eines externen Widerstandstemperatursensors.

Dadurch wird der technische Vorteil erreicht, dass über die RTD-Leitungen eine kompakte Temperaturmessung mit Widerstandstemperatursensoren ermöglicht wird. Das gesamte Zustandsüberwachungsgerät bleibt somit kompakt und kann leicht an der Maschinenkomponente, z.B. einem Lager befestigt werden.

Das Zustandsüberwachungsgerät umfasst eine interne Stromquelle, die ausgebildet ist, einen vorgegebenen Strom über die RTD-Leitungen durch den zumindest einen externen Widerstandstemperatursensor zu treiben.

Dadurch wird der technische Vorteil erreicht, dass sich eine effiziente und kompakte Temperaturmessung realisieren lässt, die das Temperaturverhalten eines Widerstands ausnutzt.

Das Zustandsüberwachungsgerät umfasst einen ersten Analog-Digital (A/D) Wandler, der ausgebildet ist, einen Spannungsabfall an den RTD-Leitungen zu erfassen und als digitalen Wert gewandelt an den Controller weiterzuleiten.

Dadurch wird der technische Vorteil erreicht, dass der gemessene Spannungsabfall und damit der Temperaturwert sich auf effiziente Weise an den Mikrocontroller übermitteln lässt.

In einer vorteilhaften Ausführungsform des Zustandsüberwachungsgeräts ist der Controller ausgebildet, basierend auf dem Spannungsabfall an den RTD-Leitungen und dem über die RTD-Leitungen getriebenen vorgegebenen Strom einen zur gemessenen Temperatur des zumindest einen Widerstandstemperatursensors proportionalen Widerstand zu berechnen.

Dadurch wird der technische Vorteil erreicht, dass die Temperaturmessung durch ein paar wenige Operationen sich sehr effizient im Mikrocontroller ausführen lässt, so dass kein komplexer Temperatursensor benötigt wird.

In einer vorteilhaften Ausführungsform umfasst das Zustandsüberwachungsgerät einen zweiten Eingang zum Anschluss zumindest eines externen Drehzahl- und/oder Positionssensors zur Erfassung zumindest einer Drehzahl und/oder Position der Maschinenkomponente, und der Controller ist ausgebildet, den Zustand der Maschinenkomponente ferner basierend auf Messdaten des zweiten Eingangs zu bestimmen.

Durch die Integration von Temperatur- und Drehzahlsensoreingängen werden alle nötigen Signale für eine optimale Zustandsdiagnose in einem Gerät vereint. Die Kosten für die Anwendung können ebenfalls gesenkt werden.

In einer vorteilhaften Ausführungsform umfasst das Zustandsüberwachungsgerät zumindest eine synchron-serielle (SSI)-Schnittstelle, die ausgebildet ist, Messdaten des an den zweiten Eingang angeschlossenen zumindest einen externen Drehzahl- und/oder Positionssensors auszulesen und an den Controller zu übertragen.

Dadurch wird der technische Vorteil erreicht, dass sich die Messdaten zur Drehzahl und/oder Position der Maschinenkomponente effizient einlesen lassen und an den Mikrocontroller übertragen werden können.

Der Vibrationssensor ist als MEMS-basierter Vibrationssensor auf Halbleiterbasis ausgeführt.

Mit einem MEMS-Sensor, der in das Zustandsüberwachungsgerät integriert ist, besteht nicht mehr die Notwendigkeit, teure externe Piezo-Sensoren zu verwenden, die beispielsweise über eine IEPE-Schnittstelle angekoppelt werden müssen. Mit dem verwendeten MEMS-Sensor lässt sich die Schwingung der Maschinenkomponente, z.B. eines Lagers mit der erforderlichen Bandbreite messen.

In einer vorteilhaften Ausführungsform des Zustandsüberwachungsgeräts ist der Controller ausgebildet, ein Amplitudenspektrum basierend auf den von dem Vibrationssensor erzeugten Messdaten zu ermitteln.

Dadurch wird der technische Vorteil erreicht, dass anhand des Amplitudenspektrums sich auf einfache Weise Schwingungen bestimmen lassen, die außerhalb des erlaubten Bereichs der Maschinenkomponente auftreten.

In einer vorteilhaften Ausführungsform umfasst das Zustandsüberwachungsgerät ein Hochpassfilter zum Filtern der von dem Vibrationssensor erzeugten Messdaten; einen Gleichrichter zum Gleichrichten der hochpassgefilterten Messdaten des Vibrationssensors; und einen zweiten Analog-Digital (A/D) Wandler zum Umwandeln der gleichgerichteten hochpassgefilterten Messdaten des Vibrationssensors in digitale Messdaten, wobei der Controller ausgebildet ist, das Amplitudenspektrum basierend auf den digitalen Messdaten des Vibrationssensors zu ermitteln.

Dadurch wird der technische Vorteil erreicht, dass der abzusuchende Frequenzbereich, in dem ein mögliches Fehlverhalten auftreten kann, sich auf einfache Weise eingrenzen lässt.

In einer vorteilhaften Ausführungsform des Zustandsüberwachungsgeräts ist der zweite A/D-Wandler im Vibrationssensor integriert, und das Hochpassfilter ist als Funktion im Controller realisiert.

Dadurch wird der technische Vorteil erreicht, dass das Zustandsüberwachungsgerät kompakt ausgeführt sein kann und damit leicht an der Maschinenkomponente angebracht werden kann.

In einer vorteilhaften Ausführungsform des Zustandsüberwachungsgeräts umfasst die Kommunikationsschnittstelle einen M12 Schraubenstecker zur Anschaltung des externen Steuergeräts und zur Spannungsversorgung.

Dadurch wird der technische Vorteil erreicht, dass eine kompakte und robuste Verbindung erzielt werden kann, die sich im Betriebsmodus der Maschinenkomponente nicht lockert, so dass zuverlässige Überwachungsergebnisse erzielt werden.

Weitere Ausführungsbeispiele werden Bezug nehmend auf die beiliegenden Zeichnungen erläutert. Es zeigen:
- Fig. 1: eine schematische Darstellung eines Zustandsüberwachungsgeräts 100 zum Überwachen des Zustands einer mechanischen Maschinenkomponente,
- Fig. 2: eine schematische Darstellung eines IO-Link Geräts 200 zum Condition Monitoring gemäß einer ersten Ausführungsform,
- Fig. 3: eine schematische Darstellung eines IO-Link Geräts 300 zum Condition Monitoring gemäß einer zweiten Ausführungsform, und
- Fig. 4: eine schematische Darstellung eines Verfahrens 400 zum Überwachen des Zustands einer mechanischen Maschinenkomponente.

Im Folgenden werden IO-Link Systeme und IO-Link Geräte bzw. Messgeräte mit IO-Link Schnittstelle beschrieben.

Bei IO-Link handelt es sich um eine serielle, bidirektionale Punkt-zu-Punkt-Verbindung für Signalübertragung und Energieversorgung unterhalb beliebiger Netzwerke, Feldbusse bzw. Rückwandbusse.

Ein IO-Link System besteht aus IO-Link Geräten, meist Sensoren, Aktoren oder Kombinationen hieraus sowie einem Standard 3-Leiter Sensor- / Aktorkabel und einem IO-Link Master. Dabei kann der Master als Gerät beliebiger Bauweise und Schutzart ausgeführt werden.

Der IO-Link Master stellt die Verbindung zwischen den IO-Link Devices bzw. IO-Link Geräten und dem Automatisierungssystem her. Als Bestandteil eines Peripheriesystems ist der IO-Link Master beispielsweise entweder im Schaltschrank oder als Remote-I/O direkt im Feld installiert. Der IO-Link Master kommuniziert über verschiedene Feldbusse oder produktspezifische Rückwandbusse. Ein IO-Link Master kann mehrere IO-Link Ports (Kanäle) besitzen. An jedem Port ist ein IO-Link Device anschließbar (über Punkt-zu-Punkt-Kommunikation). Somit ist IO-Link eine Punkt-zu-Punkt-Kommunikation.

Für die Anschlusstechnik in IP65/67 sind unter anderem M12-Steckverbinder definiert, wobei Sensoren üblicherweise einen 4-poligen Stecker und Aktoren einen 5-poligen Stecker haben. IO-Link Master verfügen grundsätzlich über eine 5-polige M12-Buchse.

Die Anschlussbelegung ist laut IEC 60974-5-2 wie folgt spezifiziert: Pin 1: 24 V; Pin 3: 0 V; Pin 4: Schalt- und Kommunikationsleitung (C/Q). Über diese 3 Pins wird neben der IO-Link Kommunikation auch eine Energieversorgung des Geräts mit maximal 200 mA realisiert.

Im Folgenden werden Messgeräte mit SPI und UART Schnittstelle beschrieben. Das Serial Peripheral Interface (kurz SPI) ist ein Bus-System für einen synchronen seriellen Datenbus, mit dem digitale Schaltungen nach dem Master-Slave-Prinzip miteinander verbunden werden können. Eine UART-Schnittstelle dient zum Senden und Empfangen von Daten über eine Datenleitung und bildet den Standard der seriellen Schnittstellen an PCs, Mikrocontrollern sowie im industriellen Bereich. Die Daten werden als serieller digitaler Datenstrom mit einem fixen Rahmen übertragen, der aus einem Start-Bit, fünf bis maximal neun Datenbits, einem optionalen Parity-Bit zur Erkennung von Übertragungsfehlern und einem Stopp-Bit besteht.

Die im Folgenden beschriebenen Geräte umfassen Kommunikationsschnittstellen, die nach dem Master-Slave Prinzip arbeiten. Master-Slave bzw. Hauptrechner-Satellitenrechner, ist ein hierarchisches Konzept für die Organisation und Verteilung von Aufgaben zwischen übergeordneten Stationen - hier die Master-Stationen - und untergeordneten Recheneinheiten, den Slaves. Solche Konzepte werden immer dann eingesetzt, wenn eine Recheneinheit die Steuerung und Aufgabenverteilung von einer anderen übernimmt.

Das Master-Slave-Konzept wird unter anderem in Client-Server Architekturen, Feldbussen und Bluetooth realisiert. Beim Client-Server-Prinzip arbeitet der Server als Master-Station, die mit einem eigenen Betriebssystem, höherer Intelligenz und einem höheren Funktionsumfang ausgestattet ist als die Clients. Die als Slave-Stationen fungierenden Clients sind passive Kommunikationsteilnehmer, die durch die Master-Station aufgefordert werden Daten zu empfangen oder zu senden.

Im Folgenden werden MEMS-Sensoren, insbesondere MEMS-Vibrationssensoren beschrieben. MEMS (Micro-Electro-Mechanical Systems) sind winzige Bauelemente, die Logikelemente und mikromechanische Strukturen in einem Chip vereinen. Sie können mechanische und elektrische Informationen verarbeiten. MEMS Elemente werden in Sensoren, Aktoren, Oszillatoren und Filtern eingesetzt. Diese Mechatronik-Chips werden meist aus Silizium hergestellt. Die Strukturen können kleiner als ein Mikrometer sein. Aufgrund der Miniaturisierung lassen sie sich wie Halbleiter billig und in Massen fertigen. MEMS-Vibrationssensoren sind dafür ausgelegt, Vibrationen bzw. mechanische Schwingungen zu messen.

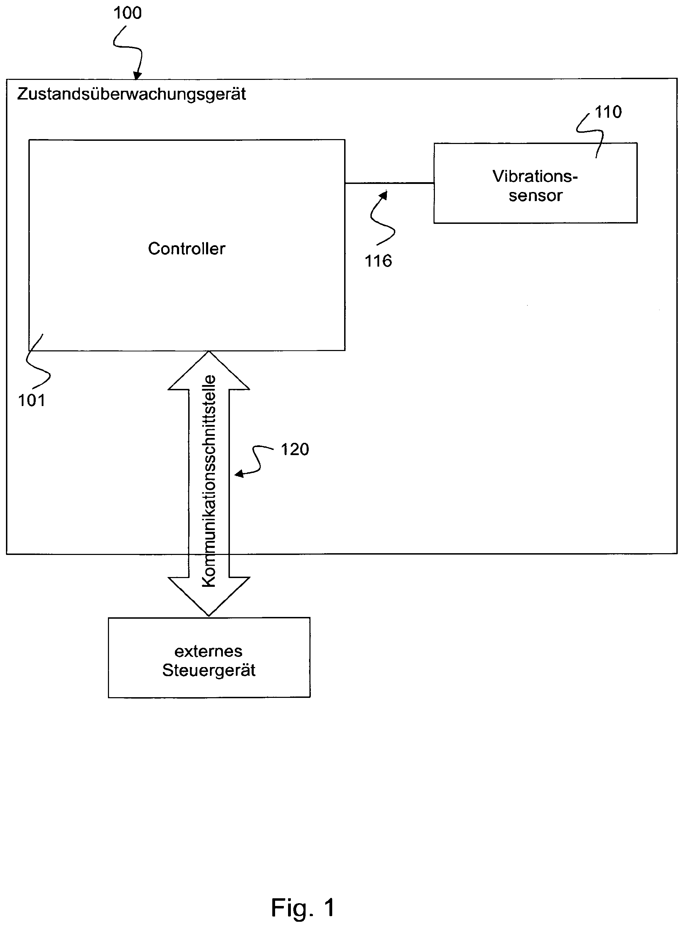

Fig. 1 zeigt eine schematische Darstellung eines Zustandsüberwachungsgeräts 100 zum Überwachen des Zustands einer mechanischen Maschinenkomponente. Das Zustandsüberwachungsgerät 100 umfasst einen Vibrationssensor 110, einen Controller 101 und eine kabelgebundene Kommunikationsschnittstelle 120.

Der Vibrationssensor 110 dient der Erfassung von mechanischen Schwingungen an der Maschinenkomponente. Der Controller 101 ist mit dem Vibrationssensor 110 gekoppelt und ausgebildet, basierend auf von dem Vibrationssensor 110 erzeugten Messdaten 116 einen Zustand der Maschinenkomponente zu bestimmen. Die Kommunikationsschnittstelle 120 ist mit dem Controller 101 kommunikationstechnisch gekoppelt und dafür ausgelegt, mit einem externen Steuergerät zu kommunizieren. Der Controller 101 ist ausgebildet, basierend auf einer Anfrage zur Übermittlung von Informationen über den Zustand der Maschinenkomponente, die angefragten Informationen über die kabelgebundene Kommunikationsschnittstelle 120 zu übertragen.

Die Kommunikationsschnittstelle 120 kann beispielsweise ausgebildet sein, das Zustandsüberwachungsgerät 100 über eine Punkt-zu-Punkt Verbindung mit dem externen Steuergerät zu koppeln. Die Kommunikationsschnittstelle 120 kann ausgebildet sein, das Zustandsüberwachungsgerät mit externer Gleichspannung zu versorgen.

Der Controller 101 kann als Slave im Master-Slave Betrieb operieren und kann über die Kommunikationsschnittstelle 120 gesteuert werden.

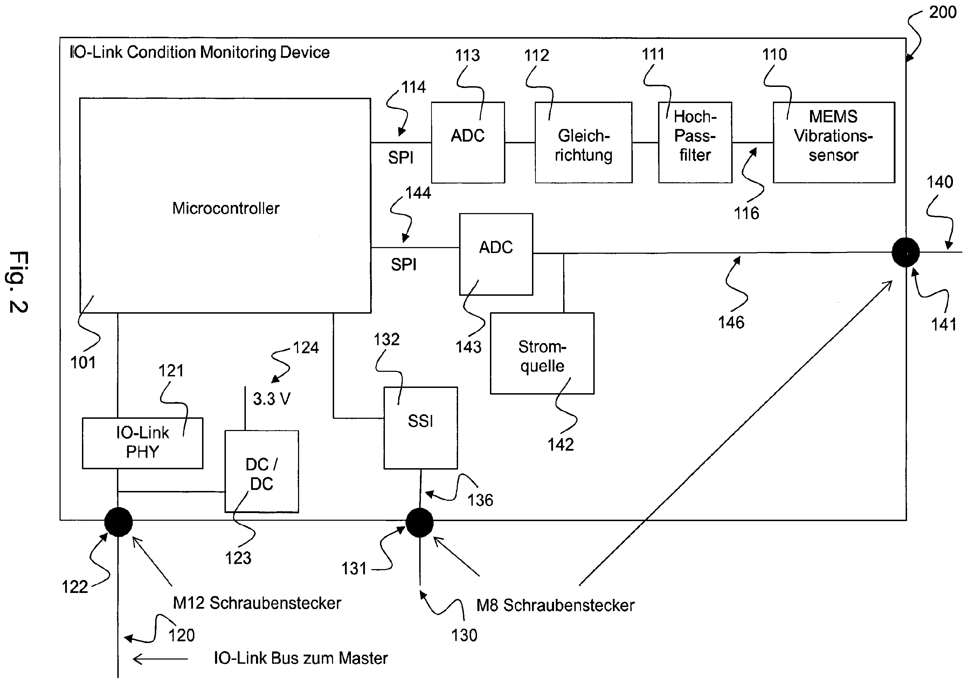

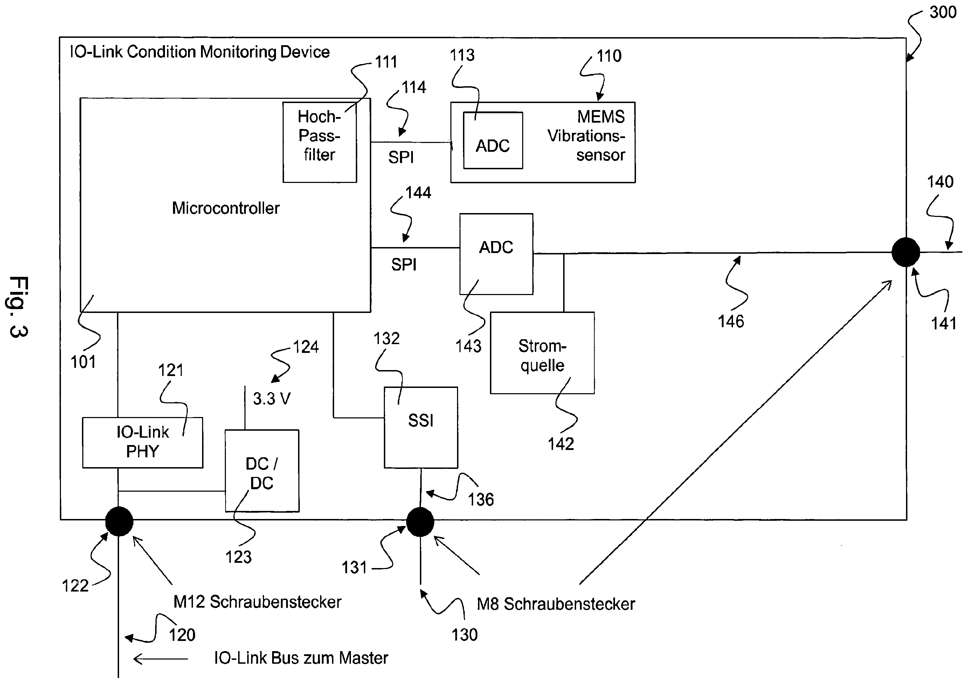

Die Kommunikationsschnittstelle 120 kann eine IO-Link Schnittstelle umfassen, wie beispielsweise in den Figuren 2 und 3 beschrieben.

Das Zustandsüberwachungsgerät 100 kann einen IO-Link PHY Baustein 121, wie beispielsweise in den Figuren 2 und 3 dargestellt, aufweisen, der ausgebildet ist, die Informationen über den Zustand der Maschinenkomponente an das externe Steuergerät zu übertragen.

In einer Ausführungsform umfasst das Zustandsüberwachungsgerät 100 einen Gleichspannungswandler 123, der ausgebildet ist, die über die Kommunikationsschnittstelle 120 zugeführte externe Gleichspannung in eine interne Systemspannung 124 zu wandeln, beispielsweise gemäß der Darstellung in Figur 2 oder 3.

In einer Ausführungsform kann das Zustandsüberwachungsgerät 100 einen ersten Eingang 140 zum Anschluss zumindest eines externen Temperatursensors zur Erfassung zumindest einer Temperatur der Maschinenkomponente umfassen, wie beispielsweise in den Figuren 2 und 3 dargestellt. Der Controller 101 kann ausgebildet sein, den Zustand der Maschinenkomponente ferner basierend auf Messdaten 146 des ersten Eingangs 140 zu bestimmen, wie beispielsweise in den Figuren 2 und 3 beschrieben.

Der erste Eingang 140 kann eine Mehrzahl von RTD-Leitungen zum Anschluss zumindest eines externen Widerstandstemperatursensors umfassen. Das Zustandsüberwachungsgerät 100 kann ferner eine interne Stromquelle 142 aufweisen, wie beispielsweise in den Figuren 2 und 3 dargestellt, die ausgebildet ist, einen vorgegebenen Strom über die RTD-Leitungen durch den zumindest einen externen Widerstandstemperatursensor zu treiben. Das Zustandsüberwachungsgerät 100 kann ferner einen ersten Analog-Digital (A/D) Wandler 143, wie beispielsweise in den Figuren 2 und 3 dargestellt, aufweisen, der ausgebildet ist, einen Spannungsabfall an den RTD-Leitungen zu erfassen und als digitalen Wert gewandelt an den Controller 101 weiterzuleiten. Der Controller 101 kann ausgebildet sein, basierend auf dem Spannungsabfall an den RTD-Leitungen und dem über die RTD-Leitungen getriebenen vorgegebenen Strom einen zur gemessenen Temperatur des zumindest einen Widerstandstemperatursensors proportionalen Widerstand zu berechnen.

Das Zustandsüberwachungsgerät 100 kann ferner einen zweiten Eingang 130 zum Anschluss zumindest eines externen Drehzahl- und/oder Positionssensors zur Erfassung zumindest einer Drehzahl und/oder Position der Maschinenkomponente umfassen, wie beispielsweise in den Figuren 2 und 3 dargestellt. Der Controller 101 kann ausgebildet sein, den Zustand der Maschinenkomponente ferner basierend auf Messdaten 136 des zweiten Eingangs 130 zu bestimmen. Das Zustandsüberwachungsgerät 100 kann ferner zumindest eine synchron-serielle (SSI)-Schnittstelle 132 aufweisen, wie beispielsweise in den Figuren 2 und 3 dargestellt, die ausgebildet ist, die Messdaten 136 des an den zweiten Eingang 130 angeschlossenen zumindest einen externen Drehzahl- und/oder Positionssensors auszulesen und an den Controller 101 zu übertragen.

Der Vibrationssensor 110 kann beispielsweise als MEMS-basierter Vibrationssensor auf Halbleiterbasis ausgeführt sein.

Der Controller 101 kann ausgebildet sein, ein Amplitudenspektrum basierend auf den von dem Vibrationssensor 110 erzeugten Messdaten 116 zu ermitteln, beispielsweise anhand einer Frequenztransformation wie einer DFT oder FFT.

In einer Ausführungsform kann das Zustandsüberwachungsgerät 100 ein Hochpassfilter 111 zum Filtern der von dem Vibrationssensor 110 erzeugten Messdaten 116 aufweisen, sowie einen Gleichrichter 112 zum Gleichrichten der hochpassgefilterten Messdaten des Vibrationssensors 110; und einen zweiten Analog-Digital (A/D) Wandler 113 zum Umwandeln der gleichgerichteten hochpassgefilterten Messdaten des Vibrationssensors 110 in digitale Messdaten, wie beispielsweise in den Figuren 2 und 3 dargestellt. Der Controller 101 kann ausgebildet sein, das Amplitudenspektrum basierend auf den digitalen Messdaten des Vibrationssensors 110 zu ermitteln.

In einer Ausführungsform kann der zweite A/D-Wandler 113 im Vibrationssensor 110 integriert sein, wie beispielsweise in Figur 3 dargestellt. Das Hochpassfilter 111 kann als Funktion im Controller 101 realisiert sein, beispielsweise als DSP (Digital Signal Processing) Funktion.

In einer Ausführungsform kann die Kommunikationsschnittstelle 120 einen M12 Schraubenstecker 122 zur Anschaltung des externen Steuergeräts und zur Spannungsversorgung umfassen, wie beispielsweise in den Figuren 2 und 3 dargestellt.

Fig. 2 zeigt eine schematische Darstellung eines IO-Link Geräts 200 zum Condition Monitoring gemäß einer ersten Ausführungsform.

Das IO-Link Gerät 200 bildet eine spezielle Ausführungsform des oben zu Figur 1 beschriebenen Zustandsüberwachungsgeräts 100. Das IO-Link Gerät 200 umfasst einen Vibrationssensor 110, einen Controller 101 und eine IO-Link Schnittstelle 120.

Der Vibrationssensor 110 dient der Erfassung von mechanischen Schwingungen an der Maschinenkomponente. Der Controller 101 ist mit dem Vibrationssensor 110 gekoppelt und ausgebildet, basierend auf von dem Vibrationssensor 110 erzeugten Messdaten 116 einen Zustand der Maschinenkomponente zu bestimmen. Die IO-Link Schnittstelle 120 ist mit dem Controller 101 kommunikationstechnisch gekoppelt und dafür ausgelegt, mit einem externen Steuergerät, beispielsweise einem IO-Link Master, zu kommunizieren. Der Controller 101 ist ausgebildet, basierend auf einer Anfrage des externen Steuergeräts zur Übermittlung von Informationen über den Zustand der Maschinenkomponente, die angefragten Informationen über die kabelgebundene Kommunikationsschnittstelle 120 an das externe Steuergerät zu übertragen.

Das IO-Link Gerät 200 umfasst ein IO-Link PHY Modul, das die Kommunikation zum IO-Link Master auf physikalischer Ebene realisiert und die Daten von dem als Slave fungierenden IO-Link Gerät 200 an das als Master fungierende Steuergerät übermittelt. Die Kommunikationsschnittstelle umfasst einen M12 Schraubenstecker 122, an den ein Kabel geschraubt werden kann, um das IO-Link Gerät 200 mit dem Steuergerät zu verbinden. Über den IO-Link 120 wird die Versorgungsspannung des IO-Link Geräts 200 übertragen, welche in einer DC/DC Komponente in die Systemspannung des IO-Link Geräts 200, z.B. 3.3 V gewandelt werden kann.

Der Vibrationssensor 110 ist als MEMS Vibrationssensor ausgeführt und über ein Hochpassfilter 111, einen Gleichrichter 112 und einen Analog-Digital Wandler 113 an eine SPI Schnittstelle des Mikrocontrollers 101 gekoppelt.

Ein erster Eingang 140 dient der Ankopplung eines oder mehrerer Temperatursensoren, z.B. Widerstandsthermometer, über einen M8 Schraubstecker 141. Eine Stromquelle 142 liefert einen vordefinierten Strom, um den oder die Temperatursensoren mit Strom zu treiben. Die dadurch bewirkte temperaturabhängige Spannungsänderung wird von einem zweiten Analog-Digital Wandler 143 aufgezeichnet und in einen digitalen Messwert gewandelt, der an eine SPI Schnittstelle 144 des Mikrocontrollers 101 übertragen wird.

Ein zweiter Eingang 130 dient der Ankopplung eines oder mehrerer Drehzahl und/oder Positionssensoren über einen M8 Schraubstecker 131. Die Messwerte 136 dieser Sensoren werden von einer SSI Schnittstelle 132 ausgelesen und dem Mikroprozessor zur Verfügung gestellt.

Bei dem in Figur 2 dargestellten IO-Link Gerät 200 werden die oben genannten Funktionen wie Vibrations-, Temperatur- und Drehzahlmessung in einem Gerät kombiniert. Auch die Auswertung der Messsignale erfolgt im Gerät. Als Bussystem wird der Sensor-/Aktor-Busstandard IO-Link gewählt. Über das IO-Link-Kabel 120 wird auch eine 24V Spannungsversorgung mitgeführt, die als Versorgung für das Gerät 200 dient. Das Gerät 200 wird mit nur einem Kabel angeschlossen und kann somit dezentral direkt an die Maschine geschraubt werden. Über den Bus 120 können neben dem Zustand des Lagers auch Messwerte wie Spektrum und Amplitude der Schwingung, sowie Lagertemperatur und Drehzahl übertragen werden. Anhand der vom Anwender parametrierten Daten zum Lager wie Drehzahl und maximale Lagertemperatur wird der Zustand des Lagers und die verbleibende Lebensdauer im Gerät 200 vom Mikrocontroller 101 berechnet. Der Anwender spart sich neben dem Einsatz von nur einem Gerät auch einen teuren, externen Piezo-Vibrationssensor.

Das Gerät 200 ist als IO-Link Slave (Device) ausgeführt und wird über den standardisierten M12 Schraubstecker 122 an den IO-Link Master angeschlossen. In der IO-Link-Leitung 120 wird neben den Bussignalen auch eine 24V Betriebsspannung mitgeführt, mit der das Gerät 200 versorgt wird. Mit einem integrierten DC/DC Wandler 123 werden im Gerät 200 aus den 24V die 3.3 V Systemspannung 124 erzeugt. Über den IO-Link Phy 121 werden die Daten vom Slave 200 an den Master übermittelt.

Das Gerät 200 verfügt über einen integrierten MEMS-basierten (auf Halbleiterbasis) Vibrationssensor 110. Die analogen Sensorsignale 116 werden für eine optimale Auswertung des Spektrums und der Amplitude der Schwingung zunächst diskret hochpassgefiltert 111, gleichgerichtet 112 und mit einem Analog/Digital-Wandler 113 erfasst. Die Übertragung der Messwerte vom ADC 113 an den Mikrocontroller 101 erfolgt über ein SPl-Interface 114.

Alternativ kann der ADC 113 im Vibrationssensor 110 integriert sein, wie in der zweiten Ausführungsform des IO-Link Geräts 300 in Figur 3 dargestellt. Die Daten werden über ein SPI-Interface 114 an den Mikrocontroller 101 übermittelt. Das Hochpassfilter 111 wird im Mikrocontroller 101 mit einer DSP-Funktion realisiert, wie in Figur 3 dargestellt. Im Mikrocontroller 101 wird aus den zeitdiskreten Messwerten mittels FFT (Fast Fourier Transformation) ein Amplitudenspektrum berechnet.

An die zwei oder mehr RTD-Temperatureingänge 140 lassen sich mit M8 Schraubsteckern 141, z.B. PT100 Temperatursensoren anschließen. Der elektrische Widerstand des Sensors ist proportional zur Temperatur. Interne Stromquellen 142 treiben einen definierten Strom durch den Temperatursensor. Der mit einem Analog/Digital-Wandler 143 gemessene Spannungsabfall am Sensor wird über ein SPI-Interface 144 an den Mikrocontroller 101 übertragen. Im Mikrocontroller 101 wird mittels des Spannungsabfalls und des getriebenen Stroms der zur Temperatur proportionale Widerstand berechnet.

An die eine oder mehreren SSI-Schnittstellen 132 lassen sich Drehzahl- oder Positionssensoren anschließen. Die Daten werden vom Sensor über den Hardware-Treiber an den Mikrocontroller 101 übertragen und von diesem ausgewertet.

Der Mikrocontroller 101 erfasst die einzelnen Sensorsignale und berechnet daraus die Lagertemperatur, die Drehzahl, die Amplitude und Spektrum der Schwingung sowie den Zustand des Lagers. Der Mikrocontroller 101 ist über ein UART-Interface mit dem IO-Link PHY 121 verbunden, beinhaltet den IO-Link Stack und stellt die Kommunikation zum Master zur Datenübertragung her.

Fig. 3 zeigt eine schematische Darstellung eines IO-Link Geräts 300 zum Condition Monitoring gemäß einer zweiten Ausführungsform.

Das IO-Link Gerät 300 bildet eine spezielle Ausführungsform des oben zu Figur 1 beschriebenen Zustandsüberwachungsgeräts 100. Das IO-Link Gerät 300 entspricht dem zu Figur 2 beschriebenen IO-Link 200, wobei der Analog-Digital Wandler 113 im MEMS Vibrationssensor 110 integriert ist und das Hochpassfilter 111 als eine Funktion, z.B. DSP Funktion im Mikrocontroller 101 realisiert ist.

Figuren 2 und 3 zeigen somit jeweils ein IO-Link Gerät 200, 300 mit M12 Schraubstecker 122 für die Busanschaltung und Spannungsversorgung; einen integrierten DC/DC-Wandler 123 zur Erzeugung der internen Systemspannung; einen integrierten Mikrocontroller 101 zur Signalverarbeitung und Signalauswertung und Buskommunikation; einen integrierten MEMS-basierten Vibrationssensor 110 zur Schwingungsmessung (Amplitude und Spektrum); RTD-Eingänge 140 zum Anschluss externer Temperatursensoren mit M8 Schraubsteckern 141; und SSI-Eingänge 130 zum Anschluss externer Drehzahl- und Positionssensoren mit M8 Schraubsteckern 131.

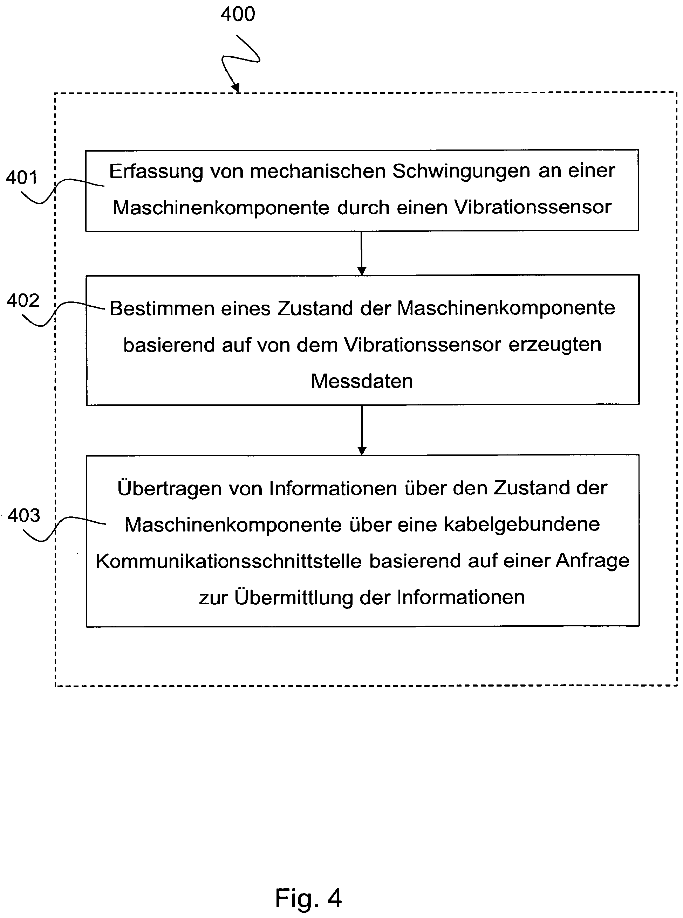

Fig. 4 zeigt eine schematische Darstellung eines Verfahrens 400 zum Überwachen des Zustands einer mechanischen Maschinenkomponente.

Das Verfahren 400 umfasst die folgenden Schritte: Erfassung 401 von mechanischen Schwingungen an einer Maschinenkomponente durch einen Vibrationssensor; Bestimmen 402 eines Zustand der Maschinenkomponente basierend auf von dem Vibrationssensor erzeugten Messdaten; und Übertragen 403 von Informationen über den Zustand der Maschinenkomponente über eine kabelgebundene Kommunikationsschnittstelle basierend auf einer Anfrage zur Übermittlung der Informationen.

Das Verfahren 400 kann beispielsweise in einem Zustandsüberwachungsgerät 100 oder einem IO-Link Gerät 200, 300, wie oben zu den Figuren 1 bis 3 beschrieben, realisiert werden.

### BEZUGSZEICHENLISTE

- 100: Zustandsüberwachungsgerät
- 101: Controller, Microcontroller
- 110: Vibrationssensor, MEMS-Vibrationssensor
- 111: Hochpassfilter
- 112: Gleichrichter
- 113: Analog-Digital Wandler
- 114: SPI Interface
- 116: Messdaten des Vibrationssensors
- 120: Kommunikationsschnittstelle, kabelgebunden, IO-LinkBus zum Master
- 121: IO-Link PHY
- 122: M12 Schraubenstecker
- 130: zweiter Eingang
- 131: M8 Schraubenstecker
- 132: SSI Schnittstelle
- 136: Messdaten des zweiten Eingangs
- 140: erster Eingang
- 141: M8 Schraubenstecker
- 142: Stromquelle
- 143: Analog-Digital Wandler
- 144: SPI Schnittstelle
- 146: Messdaten des ersten Eingangs

- 200: IO-Link Gerät gemäß erster Ausführungsform
- 300: IO-Link Gerät gemäß zweiter Ausführungsform

- 400: Verfahren zum Überwachen des Zustands einer mechanischen Maschinenkomponente
- 401: erste Schritt: Erfassen
- 402: zweiter Schritt: Bestimmen
- 403: dritter Schritt: Übertragen

## Patentansprüche

1. Zustandsüberwachungsgerät (100, 200, 300) zum Überwachen des Zustands einer mechanischen Maschinenkomponente, mit:
einem Vibrationssensor (110) zur Erfassung von mechanischen Schwingungen an der Maschinenkomponente, wobei der Vibrationssensor (110) als MEMS-basierter Vibrationssensor auf Halbleiterbasis ausgeführt ist;
einem Controller (101), der mit dem Vibrationssensor (110) gekoppelt ist, und ausgebildet ist, basierend auf von dem Vibrationssensor (110) erzeugten Messdaten (116) einen Zustand der Maschinenkomponente zu bestimmen; und
einer mit dem Controller (101) kommunikationstechnisch gekoppelten, kabelgebundenen Kommunikationsschnittstelle (120) zur Kommunikation mit einem externen Steuergerät,
wobei der Controller (101) ausgebildet ist, basierend auf einer Anfrage zur Übermittlung von Informationen über den Zustand der Maschinenkomponente, die angefragten Informationen über die kabelgebundene Kommunikationsschnittstelle (120) zu übertragen,
wobei das Zustandsüberwachungsgerät einen ersten Eingang (140) zum Anschluss zumindest eines externen Widerstandstemperatursensors zur Erfassung zumindest einer Temperatur der Maschinenkomponente aufweist,
wobei der erste Eingang (140) eine Mehrzahl von RTD-Leitungen, angeschlossen an den zumindest einen externen Widerstandstemperatursensor, umfasst,
wobei das Zustandsüberwachungsgerät eine interne Stromquelle (142) aufweist, die ausgebildet ist, einen vorgegebenen Strom über die RTD-Leitungen durch den zumindest einen externen Widerstandstemperatursensor zu treiben, und
wobei das Zustandsüberwachungsgerät einen ersten Analog-Digital (A/D) Wandler (143) aufweist, der ausgebildet ist, einen Spannungsabfall an den RTD-Leitungen zu erfassen und als digitalen Wert gewandelt an den Controller (101) weiterzuleiten,
wobei der Controller (101) ausgebildet ist, den Zustand der Maschinenkomponente ferner basierend auf Messdaten (146) des ersten Eingangs (140) zu bestimmen.

2. Zustandsüberwachungsgerät (100, 200, 300) nach Anspruch 1,
wobei die Kommunikationsschnittstelle (120) ausgebildet ist, das Zustandsüberwachungsgerät (100, 200, 300) über eine Punkt-zu-Punkt Verbindung mit dem externen Steuergerät zu koppeln.

3. Zustandsüberwachungsgerät (100, 200, 300) nach Anspruch 1 oder 2,
wobei die Kommunikationsschnittstelle (120) ausgebildet ist, das Zustandsüberwachungsgerät (100, 200, 300) mit externer Gleichspannung zu versorgen.

4. Zustandsüberwachungsgerät (200, 300) nach Anspruch 3, mit:
einem Gleichspannungswandler (123), der ausgebildet ist, die über die Kommunikationsschnittstelle (120) zugeführte externe Gleichspannung in eine interne Systemspannung (124) zu wandeln.

5. Zustandsüberwachungsgerät (100, 200, 300) nach einem der vorstehenden Ansprüche,
wobei der Controller (101) ausgebildet ist, als Slave im Master-Slave Betrieb zu operieren und über die Kommunikationsschnittstelle (120) steuerbar ist.

6. Zustandsüberwachungsgerät (200, 300) nach einem der vorstehenden Ansprüche, wobei die Kommunikationsschnittstelle (120) eine IO-Link Schnittstelle umfasst.

7. Zustandsüberwachungsgerät (200, 300) nach Anspruch 6, mit:
einem IO-Link PHY Baustein (121), der ausgebildet ist, die Informationen über den Zustand der Maschinenkomponente an das externe Steuergerät zu übertragen.

8. Zustandsüberwachungsgerät (200, 300) nach einem der vorstehenden Ansprüche,
wobei der Controller (101) ausgebildet ist, basierend auf dem Spannungsabfall an den RTD-Leitungen und dem über die RTD-Leitungen getriebenen vorgegebenen Strom einen zur gemessenen Temperatur des zumindest einen Widerstandstemperatursensors proportionalen Widerstand zu berechnen.

9. Zustandsüberwachungsgerät (200, 300) nach einem der vorstehenden Ansprüche, mit
einem zweiten Eingang (130) zum Anschluss zumindest eines externen Drehzahl- und/oder Positionssensors zur Erfassung zumindest einer Drehzahl und/oder Position der Maschinenkomponente,
wobei der Controller (101) ausgebildet ist, den Zustand der Maschinenkomponente ferner basierend auf Messdaten (136) des zweiten Eingangs (130) zu bestimmen.

10. Zustandsüberwachungsgerät (200, 300) nach Anspruch 9, mit
zumindest einer synchron-seriellen (SSI)-Schnittstelle (132), die ausgebildet ist, die Messdaten (136) des an den zweiten Eingang (130) angeschlossenen zumindest einen externen Drehzahl- und/oder Positionssensors auszulesen und an den Controller (101) zu übertragen.

11. Zustandsüberwachungsgerät (100, 200, 300) nach einem der vorstehenden Ansprüche,
wobei der Controller (101) ausgebildet ist, ein Amplitudenspektrum basierend auf den von dem Vibrationssensor (110) erzeugten Messdaten (116) zu ermitteln.

12. Zustandsüberwachungsgerät (200, 300) nach Anspruch 11, mit:
einem Hochpassfilter (111) zum Filtern der von dem Vibrationssensor (110) erzeugten Messdaten (116);
einem Gleichrichter (112) zum Gleichrichten der hochpassgefilterten Messdaten des Vibrationssensors (110); und
einem zweiten Analog-Digital (A/D) Wandler (113) zum Umwandeln der gleichgerichteten hochpassgefilterten Messdaten des Vibrationssensors (110) in digitale Messdaten,
wobei der Controller (101) ausgebildet ist, das Amplitudenspektrum basierend auf den digitalen Messdaten des Vibrationssensors (110) zu ermitteln.

13. Zustandsüberwachungsgerät (300) nach Anspruch 12,
wobei der zweite A/D-Wandler (113) im Vibrationssensor (110) integriert ist, und
wobei das Hochpassfilter (111) als Funktion im Controller (101) realisiert ist.

14. Zustandsüberwachungsgerät (200, 300) nach einem der vorstehenden Ansprüche,
wobei die Kommunikationsschnittstelle (120) einen M12 Schraubenstecker (122) zur Anschaltung des externen Steuergeräts und zur Spannungsversorgung umfasst.

## Claims

1. State monitoring device (100, 200, 300) for monitoring the state of a mechanical machine component, comprising:
a vibration sensor (110) for detecting mechanical vibrations at the machine component, wherein the vibration sensor (110) is configured as a MEMS-based vibration sensor on a semiconductor basis;
a controller (101), which is coupled to the vibration sensor (110) and is configured to determine a state of the machine component based on measurement data (116) generated by the vibration sensor (110); and
a wired communication interface (120) coupled to the controller (101) by communication technology for communication with an external control device,
wherein the controller (101) is configured, based on a request for transmission of information about the state of the machine component, to transmit the requested information via the wired communication interface (120),
wherein the state monitoring device has a first input (140) for connecting at least one external resistance temperature sensor for detecting at least one temperature of the machine component,
wherein the first input (140) comprises a plurality of RTD lines connected to the at least one external resistance temperature sensor,
wherein the state monitoring device comprises an internal current source (142), which is configured to drive a predetermined current via the RTD lines through the at least one external resistance temperature sensor, and
wherein the state monitoring device comprises a first analog-digital (A/D) converter (143), which is configured to detect a voltage drop across the RTD lines and to forward it as a converted digital value to the controller (101),
wherein the controller (101) is configured to determine the state of the machine component further based on measurement data (146) of the first input (140).

2. State monitoring device (100, 200, 300) according to claim 1,
wherein the communication interface (120) is configured to couple the state monitoring device (100, 200, 300) to the external control device via a point-to-point connection.

3. State monitoring device (100, 200, 300) according to claim 1 or 2,
wherein the communication interface (120) is configured to supply the state monitoring device (100, 200, 300) with external DC voltage.

4. State monitoring device (200, 300) according to claim 3, comprising:
a DC-DC converter (123), which is configured to convert the external DC voltage supplied via the communication interface (120) into an internal system voltage (124).

5. State monitoring device (100, 200, 300) according to one of the preceding claims,
wherein the controller (101) is configured to operate as a slave in master-slave mode and is controllable via the communication interface (120).

6. State monitoring device (200, 300) according to one of the preceding claims,
wherein the communication interface (120) comprises an IO-Linkinterface.

7. State monitoring device (200, 300) according to claim 6, comprising:
an IO-LinkPHY module (121), which is configured to transmit the information about the state of the machine component to the external control device.

8. State monitoring device (200, 300) according to one of the preceding claims,
wherein the controller (101) is configured to calculate a resistance proportional to the measured temperature of the at least one resistance temperature sensor based on the voltage drop across the RTD lines and the predetermined current driven via the RTD lines.

9. State monitoring device (200, 300) according to one of the preceding claims, comprising
a second input (130) for connecting at least one external speed and/or position sensor for detecting at least one speed and/or position of the machine component,
wherein the controller (101) is configured to determine the state of the machine component further based on measurement data (136) of the second input (130).

10. State monitoring device (200, 300) according to claim 9, comprising
at least one synchronous serial (SSI) interface (132), which is configured to read out the measurement data (136) of the at least one external speed and/or position sensor connected to the second input (130) and to transmit it to the controller (101).

11. State monitoring device (100, 200, 300) according to one of the preceding claims,
wherein the controller (101) is configured to determine an amplitude spectrum based on the measurement data (116) generated by the vibration sensor (110).

12. State monitoring device (200, 300) according to claim 11, comprising:
a high-pass filter (111) for filtering the measurement data (116) generated by the vibration sensor (110);
a rectifier (112) for rectifying the high-pass filtered measurement data of the vibration sensor (110); and
a second analog-digital (A/D) converter (113) for converting the rectified high-pass filtered measurement data of the vibration sensor (110) into digital measurement data,
wherein the controller (101) is configured to determine the amplitude spectrum based on the digital measurement data of the vibration sensor (110).

13. State monitoring device (300) according to claim 12,
wherein the second A/D converter (113) is integrated in the vibration sensor (110), and
wherein the high-pass filter (111) is implemented as a function in the controller (101).

14. State monitoring device (200, 300) according to one of the preceding claims,
wherein the communication interface (120) comprises an M12 screw connector (122) for connecting the external control device and for supplying power.

## Revendications

1. Dispositif de surveillance d'état (100, 200, 300) pour surveiller l'état d'un composant mécanique d'une machine, comprenant :
un capteur de vibrations (110) pour détecter des vibrations mécaniques au niveau du composant de la machine, le capteur de vibrations (110) étant configuré comme un capteur de vibrations à base de MEMS à base de semi-conducteurs ;
un contrôleur (101), qui est couplé au capteur de vibrations (110) et est configuré pour déterminer un état du composant de la machine sur la base de données de mesure (116) générées par le capteur de vibrations (110) ; et
une interface de communication filaire (120) couplée au contrôleur (101) par technologie de communication pour la communication avec un dispositif de commande externe,
dans lequel le contrôleur (101) est configuré, sur la base d'une demande de transmission d'informations sur l'état du composant de la machine, pour transmettre les informations demandées via l'interface de communication filaire (120),
dans lequel le dispositif de surveillance d'état comporte une première entrée (140) pour connecter au moins un capteur de température à résistance externe pour détecter au moins une température du composant de la machine,
dans lequel la première entrée (140) comprend une pluralité de lignes RTD connectées au moins à un capteur de température à résistance externe,
dans lequel le dispositif de surveillance d'état comprend une source de courant interne (142), qui est configurée pour entraîner un courant prédéterminé via les lignes RTD à travers le ou les capteurs de température à résistance externe, et
dans lequel le dispositif de surveillance d'état comprend un premier convertisseur analogique-numérique (A/N) (143), qui est configuré pour détecter une chute de tension sur les lignes RTD et pour la transmettre sous forme de valeur numérique convertie au contrôleur (101),
dans lequel le contrôleur (101) est configuré pour déterminer l'état du composant de la machine en fonction des données de mesure (146) de la première entrée (140).

2. Dispositif de surveillance d'état (100, 200, 300) selon la revendication 1,
dans laquelle l'interface de communication (120) est configurée pour coupler le dispositif de surveillance d'état (100, 200, 300) au dispositif de commande externe via une connexion point à point.

3. Dispositif de surveillance d'état (100, 200, 300) selon la revendication 1 ou 2,
dans lequel l'interface de communication (120) est configurée pour alimenter le dispositif de surveillance d'état (100, 200, 300) avec une tension continue externe.

4. Dispositif de surveillance d'état (200, 300) selon la revendication 3, comprenant :
un convertisseur CC-CC (123), qui est configuré pour convertir la tension CC externe fournie via l'interface de communication (120) en une tension système interne (124).

5. Dispositif de surveillance d'état (100, 200, 300) selon l'une des revendications précédentes,
dans lequel le contrôleur (101) est configuré pour fonctionner comme un esclave en mode maître-esclave et est contrôlable via l'interface de communication (120).

6. Dispositif de surveillance d'état (200, 300) selon l'une des revendications précédentes,
dans lequel l'interface de communication (120) comprend une interface IO-Link.

7. Dispositif de surveillance d'état (200, 300) selon la revendication 6, comprenant :
un module PHY IO-Link (121), qui est configuré pour transmettre les informations sur l'état du composant de la machine au dispositif de contrôle externe.

8. Dispositif de surveillance d'état (200, 300) selon l'une des revendications précédentes,
dans lequel le contrôleur (101) est configuré pour calculer une résistance proportionnelle à la température mesurée du ou des capteurs de température à résistance sur la base de la chute de tension à travers les lignes RTD et du courant prédéterminé conduit via les lignes RTD.

9. Dispositif de surveillance d'état (200, 300) selon l'une des revendications précédentes, comprenant
une deuxième entrée (130) pour connecter au moins un capteur externe de vitesse et/ou de position pour détecter au moins une vitesse et/ou une position du composant de la machine,
dans lequel le contrôleur (101) est configuré pour déterminer l'état du composant de la machine en fonction des données de mesure (136) de la seconde entrée (130).

10. Dispositif de surveillance d'état (200, 300) selon la revendication 9, comprenant au moins une interface série synchrone (SSI) (132) , qui est configurée pour lire les données de mesure (136) du ou des capteurs de vitesse et/ou de position externes connectés à la deuxième entrée (130) et pour les transmettre au contrôleur (101).

11. Dispositif de surveillance d'état (100, 200, 300) selon l'une des revendications précédentes,
dans lequel le contrôleur (101) est configuré pour déterminer un spectre d'amplitude sur la base des données de mesure (116) générées par le capteur de vibrations (110).

12. Dispositif de surveillance d'état (200, 300) selon la revendication 11, comprenant :
un filtre passe-haut (111) pour filtrer les données de mesure (116) générées par le capteur de vibrations (110) ;
un redresseur (112) pour redresser les données de mesure filtrées passe-haut du capteur de vibrations (110) ; et
un deuxième convertisseur analogique-numérique (A/N) (113) pour convertir les données de mesure filtrées passe-haut redressées du capteur de vibrations (110) en données de mesure numériques,
dans lequel le contrôleur (101) est configuré pour déterminer le spectre d'amplitude sur la base des données de mesure numériques du capteur de vibrations (110).

13. Dispositif de surveillance d'état (300) selon la revendication 12,
dans lequel le deuxième convertisseur A/N (113) est intégré dans le capteur de vibrations (110), et
dans lequel le filtre passe-haut (111) est implémenté en tant que fonction dans le contrôleur (101).

14. Dispositif de surveillance d'état (200, 300) selon l'une des revendications précédentes,
dans laquelle l'interface de communication (120) comprend un connecteur à vis M12 (122) pour connecter le dispositif de commande externe et pour fournir de l'énergie.
